# FASCICULE DE BREVET EUROPEEN

(11) **EP 0 456 781 B1**
(45) Date de publication et mention de la délivrance du brevet: **03.01.1996**
(21) Numéro de dépôt: 90916763.7
(22) Date de dépôt: 31.10.1990
(51) Int. Cl.: B01D 35/143

(54) **INDICATEUR DE COLMATAGE**
VERSTOPFUNGSINDIKATOR
CLOGGING INDICATOR

(30) Priorité: 31.10.1989 FR 8914301; 01.03.1990 FR 9002595
(43) Date de publication de la demande: 21.11.1991
(73) Titulaire: LE BOZEC ET GAUTIER, F-92400 Courbevoie (FR)
(72) Inventeur: TRAONVOEZ, Jean-Michel, F-95570 Bouffemont (FR); POTTIER, Philippe, F-78420 Carrières-sur-Seine (FR); TERTRE, Dominique, F-78240 Croissy-sur-Seine (FR)
(74) Mandataire: Hammond, William
(86) Numéro de dépôt international: FR9000790
(87) Numéro de publication internationale: WO9106357

(56) Documents cités:
- WO-A-82/02622
- DE-A- 2 139 852
- DE-A- 2 906 784
- FR-A- 2 558 255
- GB-A- 2 092 752
- GB-A- 2 189 603
- US-A- 2 942 572
- US-A- 3 140 690
- US-A- 4 172 971
- US-A- 4 792 651
- Patent Abstracts of Japan, vol. 11, no. 24 (C-399)(2471), 23 janvier 1987; & JP-A-61197014 (TSUCHIYA MFG CO:, LTD) 1er septembre 1986

## Description

L'invention concerne un indicateur de colmatage de filtre pour fluide, comportant des moyens de détection des variations de pression aux bornes dudit filtre (c'est-à-dire entre son amont et son aval).

On sait que les impuretés de toutes sortes qui sont arrêtées par le filtre, nuisent au bon écoulement du fluide, et au fonctionnement des organes sur le circuit en aval dudit filtre, et elles entraînent progressivement son colmatage. Ce colmatage provoque une différence de pression à ses bornes et c'est pourquoi les indicateurs de colmatage sont munis de moyens pour déceler les variations de pression entre l'amont et l'aval. Toutefois, les variations de pression ne sont pas dûes exclusivement aux impuretés entraînant le colmatage, mais aussi parfois à la qualité (viscosité) du fluide, souvent lié à la température.

En effet, dans le cas d'un liquide visqueux (par exemple hydrocarbure, huile), la viscosité augmente lorsque la température baisse, ce qui provoque une différence de prsssion importante aux bornes du filtre (même sans impureté), que l'indicateur de colmatage est chargé de surveiller. L'indicateur confond alors l'effet de la viscosité avec l'effet de colmatage.

On a déjà tenté de remédier à cet inconvénient ainsi que cela a été enseigné par divers brevets, notamment le brevet US 2.942.572 déposé le 17 Juin 1958 au nom de Davis B. PELL, et par le brevet FR 2.558.255 déposé le 12 Janvier 1984 au nom de FACET ENTERPRISES Inc., soit à l'aide d'un bilame, soit à l'aide d'une bague fendue déformable en fonction de la température du fluide. Ces dispositifs se déforment perpendiculairement à l'axe des éléments coulissants de l'appareil, et sont agencés pour réduire le passage réservé à l'un de ces éléments lorsque la température est inférieure à une valeur déterminée. Il peut alors se produire un verrouillage mécanique dudit élément coulissant. De ce fait, l'indicateur de colmatage se trouve hors service à ces températures inférieures.

Ces dispositifs sont difficiles à construire, et à agencer dans l'appareil et ils sont onéreux. Leur fonctionnement est délicat, et il se produit des défaillances intolérables pour un appareil de ce type.

Pour remédier à ces inconvénients et améliorer les qualités de tels dispositifs, l'inventeur a mis au point un indicateur de colmatage de filtre au passage d'un fluide du type comportant un corps creux en une matière couramment appelée amagnétique, un piston déplaçable dans un logement approprié dudit corps, un aimant monté sur le piston, et un dispositif détectant la position de l'aimant, indicateur de colmatage caractérisé par le fait que ledit aimant porté ou non par un porte-aimant est déplaçable axialement par rapport au piston et un ressort en Alliage à Mémoire de Forme (AMF) raide au-dessus d'une température déterminée et souple en-dessous est monté entre une butée solidaire du piston et une butée solidaire de l'aimant de sorte que le ressort solidarise en déplacement l'aimant avec le piston lorsqu'il est au-dessus de ladite température déterminée, alors qu'il autorise par compression un déplacement axial de l'aimant par rapport au piston en-dessous de cette température.

Plusieurs formes de réalisation de l'invention sont possibles, par exemple avec ou sans témoin mécanique.

Dans le cas d'un indicateur de colmatage avec témoin coulissant, l'invention a pour objet un indicateur de colmatage de filtre au passage d'un fluide, comportant un corps sensiblement cylindrique (en un ou plusieurs éléments) muni extérieurement des moyens de fixation, ledit corps ayant fait l'objet d'alésages et contre-alésages ayant le même axe et déterminant deux logements dits supérieur et inférieur ouverts chacun à une extrémité opposée du cylindre :
- le logement dit supérieur étant occupé par un témoin aimanté (ou aimantable) mobile avec son dispositif d'assujettissement, à l'intérieur dudit logement lequel est sous pression atmosphérique,
- le logement dit inférieur, communiquant en partie haute avec l'amont du filtre et en partie basse avec l'aval, étant occupé par :
- un piston divisant le logement en deux chambres (dites haute et basse)
- un aimant avec son porte-aimant dans la chambre haute
- un ressort de rappel du piston vers le fond de son logement et placé dans la chambre basse,
la chambre dite haute du logement dit inférieur comportant en outre un ressort à spires en Alliage à Mémoire de Forme (AMF), raide à température élevée et mou à basse température, ayant le même axe rectiligne que le piston, et pouvant être comprimé à basse température sous l'effet d'un force insignifiante, suivant le même axe que le piston, ledit ressort en AMF étant agencé de façon à solidariser ou non l'aimant au piston selon que la température est élevée ou non.

Le ressort en AMF est disposé entre une butée solidaire de l'aimant et une butée solidaire du piston. A chaud, du fait de sa raideur, le ressort en AMF solidarise l'aimant au piston, et tout déplacement de ce dernier entraîne le déplacement de l'aimant. A froid, le ressort en AMF devient flexible et permet le déplacement du piston, sans entraînement de l'aimant.

Le fonctionnement du ressort à spires en Alliage à Mémoire de Forme utilisé, est particulièrement sûre. Sa fabrication et sa mise en place sont aisées.

Dans l'indicateur de colmatage de ce type les deux logements sont usinés suivant le même axe, un à chaque extrémité du cylindre. Les logements sont séparés par une membrane étanche venue d'usinage dont l'épaisseur est comprise entre 2/10 et 10/10 de millimètre. La partie inférieure du logement inférieur (reliée à l'aval du filtre) est fermée par une rondelle dont le bord de l'orifice central est relevé vers l'intérieur suivant une collerette servant de guide au ressort de rappel du piston. Par le trou central de la rondelle, la chambre dite basse communique avec l'aval du filtre.

Ce piston présente extérieurement deux parties principales déterminant entre elles un épaulement contre lequel appuie le ressort de rappel, la partie haute (de plus grande section) étant munie d'un joint d'étanchéité, par exemple torique. Le piston est en outre alésé axialement à partir de sa tête de façon à déterminer un logement, une gorge circulaire étant creusée près de son ouverture.

L'aimant est de préférence fixé sur un porte-aimant dont la forme est adaptée aux dimensions de l'appareil. Le porte-aimant peut être formé, d'une part, par un tige axiale comportant une nervure circulaire près de son extrémité inférieure libre et, d'autre part, par une coupelle à sa partie supérieure, laquelle contient l'aimant.

Dans ce dernier cas, le ressort en AMF est disposé autour de la tige du porte-aimant et il se trouve ainsi maintenu et guidé. Cette tige est glissée dans l'alésage du piston et emprisonnée par une rondelle ou un jonc d'arrêt placé dans la gorge prévue dans l'alésage du piston. Après montage, le ressort en AMF entoure la tige du porte-aimant et est compris entre la nervure circulaire dont est munie la tige du porte-aimant, et la rondelle ou le jonc d'arrêt.

Le ressort en AMF est en alliage de Nickel-Titane ou de Cuivre-Zinc-Aluminium.

De préférence, le logement supérieur est en deux parties : une première partie faisant face à la chambre de l'autre côté de la membrane et une partie haute de plus grand diamètre s'ouvrant largement sur l'extérieur.

Le corps est muni extérieurement d'une pièce comprenant une partie coiffante, formant bouchon du logement. Cette pièce coiffante peut tourner autour de la paroi extérieure de la partie haute du corps de l'indicateur, et, à cet effet, une gorge a été creusée dans ledit corps au-dessus de la collerette, tandis qu'une autre gorge a été creusée à la base interne du bouchon, un jonc logé dans ces deux gorges assurant la liaison de la pièce sur le corps. La partie coiffante de la pièce est percée de part en part de façon à former deux passages successifs ayant le même axe et déterminant entre eux un épaulement faisant face à la partie terminale supérieure du corps et dépassant au-dessus de la chambre.

Dans le logement supérieur est disposé un ensemble d'éléments assujettissant le témoin de colmatage, comprenant une tige munie à sa base d'un aimant pouvant être appliqué contre la membrane, une bague de couleur vive différentes des autres pièces comprenant une collerette externe pouvant prendre appui contre un épaulement du bouchon, une creusure circulaire externe, une nervure circulaire interne (formant épaulement en partie haute), un ressort de rappel entourant la tige entre la membrane et la nervure.

La pièce coiffante comporte un appendice avec une chambre pour loger un interrupteur, le fond de la chambre étant traversé par un canal dans lequel peut coulisser une entretoise formant poussoir normalement repousser par le bouton-poussoir d'un interrupteur contre la paroi de la bague, éventuellement dans la creusure, selon la position de ladite bague.

Différentes autres formes de réalisations de l'invention sont possibles, par exemple sans témoin mécanique, et avec des moyens de détection sensibles aux flux magnétiques.

Un tel indicateur de colmatage de filtre est caractérisé, selon l'invention, par le fait que l'aimant porté par un porte-aimant coopérant avec la tête du piston est déplaçable par rapport à ce dernier en fonction des forces antagonistes de deux ressorts, l'un en Alliage à Mémoire de Forme (AMF) raide au-dessus d'une température déterminée et souple en-dessous, l'autre en alliage classique ayant une force inférieure à celle du ressort chaud mais supérieure à celle de ce même ressort froid, et des moyens pour agencer les ressorts de façon qu'à chaud le ressort en AMF solidarise le porte-aimant au piston, tandis qu'à froid, le ressort classique repousse le porte-aimant.

Le logement est ouvert vers le bas, l'aimant étant dirigé vers le fond dudit logement divisé par un moyen en deux chambres, l'une dite basse communiquant avec l'aval d'un filtre, l'autre dite haute communiquant par l'amont dudit filtre, de telle manière que si la pression dans la chambre haute devient supérieure à celle de la chambre basse, il se produit une différence de pression pouvant dépasser une certaine valeur provoquant alors le déplacement du piston et un moyen pour détecter hors du logement la position de l'aimant, ledit moyen de détection étant constitué par au moins une ampoule à lames souples sensibles au flux magnétique, et relié à un dispositif électrique approprié.

Le porte-aimant comprend un tige munie d'une nervure circulaire et le ressort en AMF appuie sur la face supérieure de ladite nervure et le ressort classique sur la face inférieure de celle-ci.

Quant au piston, il comporte un alésage axial avec une gorge circulaire, muni d'une rondelle, un ressort en Alliage à Mémoire de Forme (AMF) compris entre la nervure et la rondelle, le ressort calibré de rappel étant interposé entre la nervure et le fond du logement.

Le corps comporte un logement axial en deux parties, basse et haute, et un piston en deux parties, basse et haute, le logement étant divisé en deux chambres dites basse et haute à l'aide d'une cloison étanche et flexible formée par un soufflet en élastomère fixé, d'une part, à la base de la partie haute du piston et, d'autre part, à un dispositif fermant la base du logement. Il est de préférence surmonté d'une partie formant coiffe laquelle coiffe comporte au moins deux interrupteurs sensibles au flux magnétique, telles que des ampoules disposées à des niveaux différents le long de la périphérie du corps.

De préférence, une chemise métallique de faible épaisseur est interposée entre le corps et les ampoules avec une fenêtre par ampoule.

Le piston comprend un profond alésage axial ouvert vers le haut avec à l'intérieur de cet alésage, près de son ouverture, un moyen (rondelle) de retenue. Le ressort en Alliage à Mémoire de Forme est monté de façon à être compris entre la nervure à son extrémité inférieure et la rondelle de retenue à sa partie supérieure.

Le ressort classique antagoniste est monté de façon à être compris entre la nervure à son extrémité supérieure et le fond de l'alésage de la tête du piston.

Dans ce type d'indicateur de colmatage on trouve un corps dont le logement axial ouvert vers le bas est en deux parties, basse et haute,et il est divisé en deux chambres dites basse et haute à l'aide d'une cloison étanche flexible formée par un soufflet en élastomère fixé d'une part à la base de la partie haute du piston mobile et d'autre part à un dispositif fermant la base fixe du logement.

L'indicateur de colmatage décrit est réalisé en deux éléments principaux. Il comprend un corps surmonté d'un autre élément formant coiffe, coiffe qui comporte au moins une ampoule à lames souples (ILS). Dans le cas de plusieurs ampoules, elles sont disposées à des niveaux différents le long de la périphérie du corps dont les parois sont de faible épaisseur. Dans le cas d'une pluralité d'ampoules, une chemise métallique peu épaisse peut être interposée entre le corps dans lequel se déplace l'aimant et les ampoules, avec une fenêtre au niveau des dites ampoules.

Pour mieux faire comprendre l'invention, il est donné ci-après des exemples de réalisation en référence aux dessins annexés dans lesquels :
Fig. 1 est une vue en coupe de l'indicateur de colmatage avec témoin,

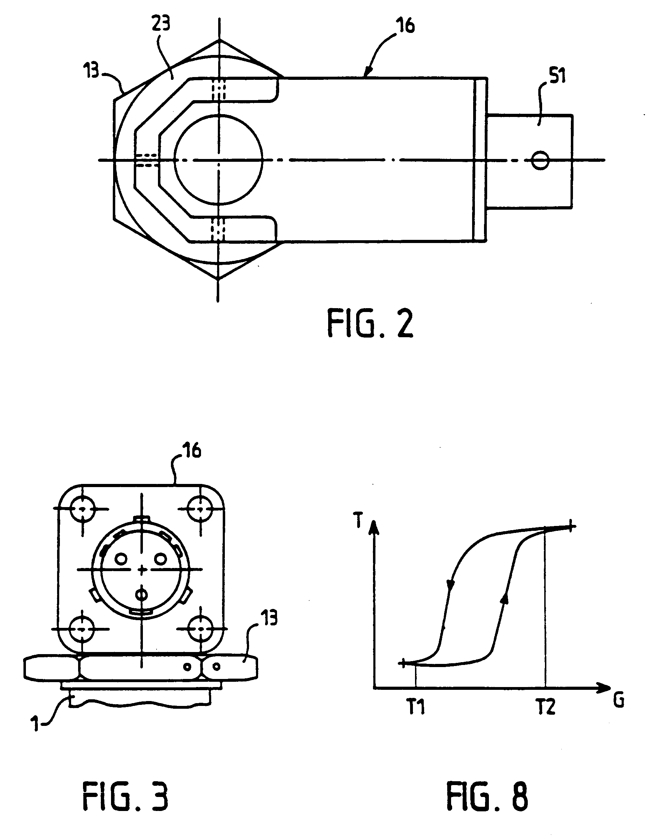

Fig. 2 est une vue de dessus de l'indicateur de la Fig. 1,
Fig. 3 et une vue latérale de l'indicateur de la Fig. 1,
Fig. 4 à 8 montrent schématiquement le fonctionnement de l'appareil de la Fig. 1,
Fig. 9 est une vue en coupe d'un indicateur avec une ampoule : lames souples,
Fig. 10 à 13 sont des schémas de fonctionnement avec une ampoule,
Fig. 14 et 15 sont des schémas de fonctionnement avec deux ampoules.

Le corps 1 de l'indicateur de colmatage est réalisé en un ou plusieurs éléments, en une matière non magnétique (alliage d'aluminium par exemple) selon le premier mode de réalisation, ce corps est alésé axialement depuis chaque extrémité pour déterminer deux logements 2 et 3 séparés par une membrane étanche 4 dont l'épaisseur est déterminée par l'usinage des deux logements. Cette membrane 4 a une épaisseur comprise entre 2/10 et 10/10 de millimètre et de préférence 5/10. Les deux logements 2 et 3 sont ainsi complètement séparés et sont dits inférieur et supérieur 3 dans le présent mémoire.

Le logement 2 est en trois parties. La partie supérieure 5 sur la figure est appelée chambre haute et communique avec l'amont du filtre (ou du dispositif provoquant la différence de charge à détecter) non représenté, par un canal 8 traversant la paroi du corps 1.

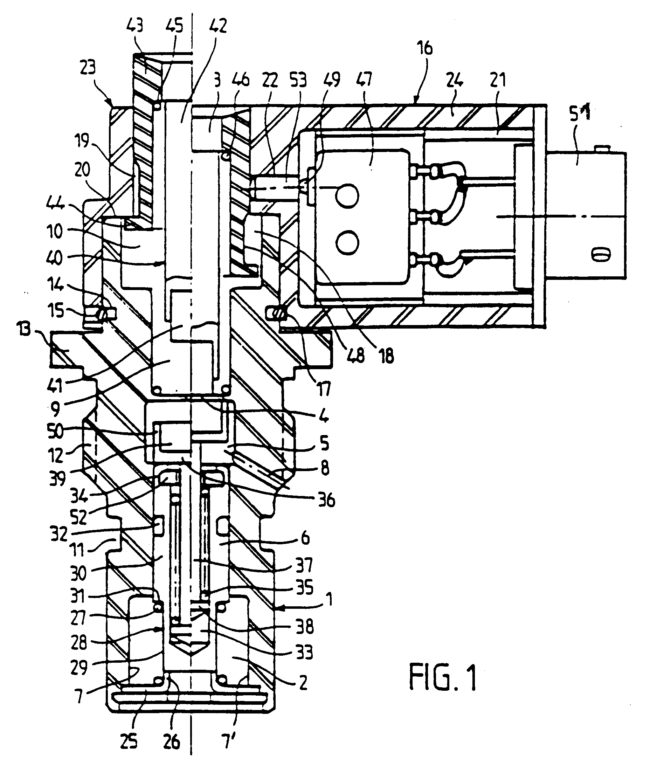

Dans l'exemple de la Fig. 1, la partie centrale 6 du logement 2 est d'un diamètre moindre que les deux autre parties, et sensiblement plus longue. La partie inférieure 7 est largement ouverte à son extrémité inférieure, et son rebord 7' est usiné pour recevoir une fermeture, déterminant ainsi la chambre basse (même référence 7).

Le logement 3, est en deux parties 9 et 10 (cette dernière d'un diamètre plus grand). La partie 9, qui vient en face de la chambre 5, a pour fond la membrane 4 dont il a été question précédemment et séparant de façon étanche les logements 2 et 3.

La chambre 10 est largement ouverte vers l'extérieur à sa partie supérieure.

Extérieurement le corps 1 comporte :
- au niveau de la chambre cylindrique 6 une gorge 11, un joint torique (non référence),
- au niveau de la chambre 5, un filetage 12,
- au niveau de la chambre 9, une collerette 13 à six pans,
- au niveau de la chambre 9, une gorge 14 recevant un jonc métallique 15.

Sur la figure 1, la référence 16 désigne une pièce complexe à usage multiple, dont une partie forme bouchon 23, car elle coiffe la chambre 10 du corps 1 sur lequel elle est maintenue par le jonc 15 qui pénètre dans une gorge 17 prévue à cet effet à sa base, en relation avec la gorge 14 prévue sur la périphérie du corps 1 au-dessus de la collerette 13. La pièce 16 peut ainsi tourner sur le corps 1. Le bouchon 23, de la pièce 16 est percé verticalement de part en part de façon à former deux passages se faisant suite 18 et 19 déterminant entre eux un épaulement 20 faisant face à la partie terminale supérieure (sur la figure) du corps 1 et dépassant sur le pourtour à l'intérieur de la chambre 10. Perpendiculairement à l'axe commun des deux passages 18 et 19, est prévu un appendice 24 usiné pour déterminer une chambre 21 dont le fond communique avec la chambre 19 du bouchon 23 par un alésage 22.

L'ensemble du corps 1 et de la pièce 16 forme le contenant de l'indicateur de colmatage. Le corps 1 est vissé sur le filtre ou un support de façon classique, tandis que la pièce 16 peut pivoter librement sur la partie du corps 1 qui se trouve hors du filtre.

Le contenant est muni à sa partie inférieure d'une rondelle 25 dont le bord de l'orifice central est relevé en forme de collerette 26. Cette rondelle 25 est maintenue dans l'orifice 7' par tout moyen connu, tel que jonc ou clip. Sur cette rondelle 25, s'appuye autour de la collerette guide 26, la base d'un ressort taré, à boudin 27, entourant la partie inférieure 29 d'un piston 28. Sur la Fig. 1 les pièces mobiles internes (dont le piston) sont représentées : en position ALARME à gauche de l'axe et, dans une position REPOS à droite de l'axe. Le piston 28 est en deux parties principales 29 et 30 déterminant entre elles un épaulement 31 bien visible sur la figure. Le ressort 27 se trouve ainsi compris entre cet épaulement 31 et la rondelle 25. La tige 30 (ou plongeur) du piston 28 comporte une gorge 32 prévue pour retenir un joint d'étanchéité par exemple torique. Intérieurement, le piston 28 est alésé axialement pour déterminer un loge ment 33 et une gorge circulaire 34 est creusée près de son ouverture pour la mise en place d'une rondelle 52 en deux parties, retenant un ressort 35, dont les caractéristiques et le rôle très important seront décrits plus en détail ultérieurement. A l'intérieur du logement 33 peut coulisser la tige 37 d'un porte-aimant 36. La base libre de la tige 37 comporte une nervure circulaire 38 déterminant d'une part, un épaulement d'arrêt pour le ressort 35 qui est en Alliage à Mémoire de Forme, et d'autre part, un moyen de guidage dans le logement 33. La partie supérieure de la tige 37 et évidée en forme de coupelle, ou munie d'une coupelle 50 contenant un aimant 39.

L'aimant 39 est, en position de repos et en position de verrouillage thermostatique, appliqué contre la membrane 4 (sur la partie droite de la Fig. 1).

De l'autre côté de cette membrane 4 se trouve un sous-ensemble 40 comprenant le témoin de l'appareil.

Ce témoin est consistué par un barreau magnétique, ou un aimant 41 convenablement fixé dans une coupelle d'une tige ou barre 42. Autour de la partie supérieure de cette tige ou barre 42 est disposée une bague 43 de couleur différente des autres pièces, et de préférence rouge. A la base de cette bague 43 est prévue une collerette 44 l'empêchant de s'échapper de la chambre 19. La bague 43 est formée de façon à comporter une partie terminale interne de moindre diamètre déterminant un épaulement 45. La tige (ou barre) 42 et la bague 43 sont solidarisées dans cette partie terminale, par exemple par emmanchement à force. L'épaulement 45 détermine entre les parois extérieures de la barre 42 et intérieure de la bague 43, un espace cylindrique dans lequel on place un ressort à spires (dit souvent boudin) 46. Le ressort 46 entoure la barre 42 et, compris entre la membrane 4 et l'apaulement 45, tend à repousser la bague 43 vers l'extérieur. La bague 43 présente extérieurement au-dessus de la collerette 44 une creusure 48.

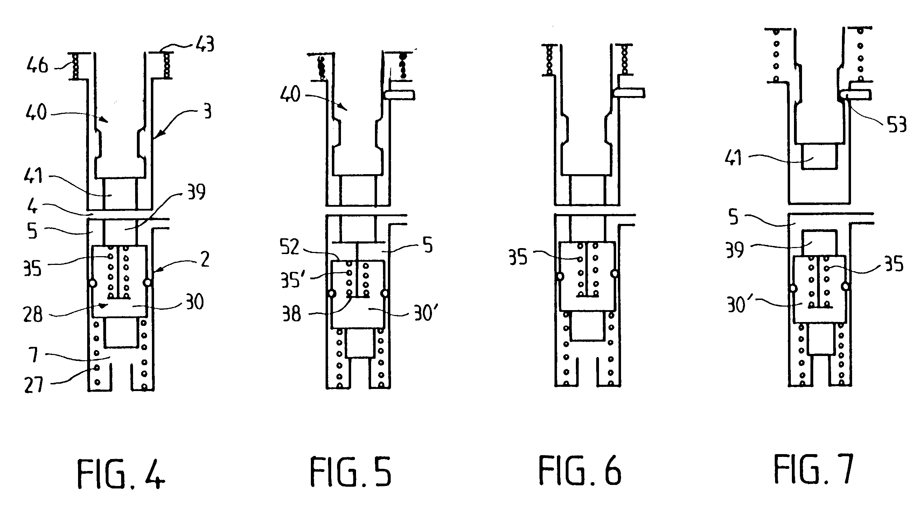

La pièce 16 comporte un appendice 24 dont la chambre 21 est occupée par un interrupteur 47 (ou tout autre dispositif électrique équivalent) muni d'un bouton poussoir 49 se présentant face à l'alésage 22. Lorsque le bouton poussoir a une longueur insuffisante pour atteindre la bague 43, an dispose dans l'alésage 22, une entretoise mobile, formant poussoir complémentaire 53 (bien visible en Fig. 7). Le poussoir 53 est élastiquement repoussé par le bouton 49, contre la paroi de la bague 43. Sur la Fig. 1, la référence 51 désigne un connecteur maintenu par vis sur la pièce 16.

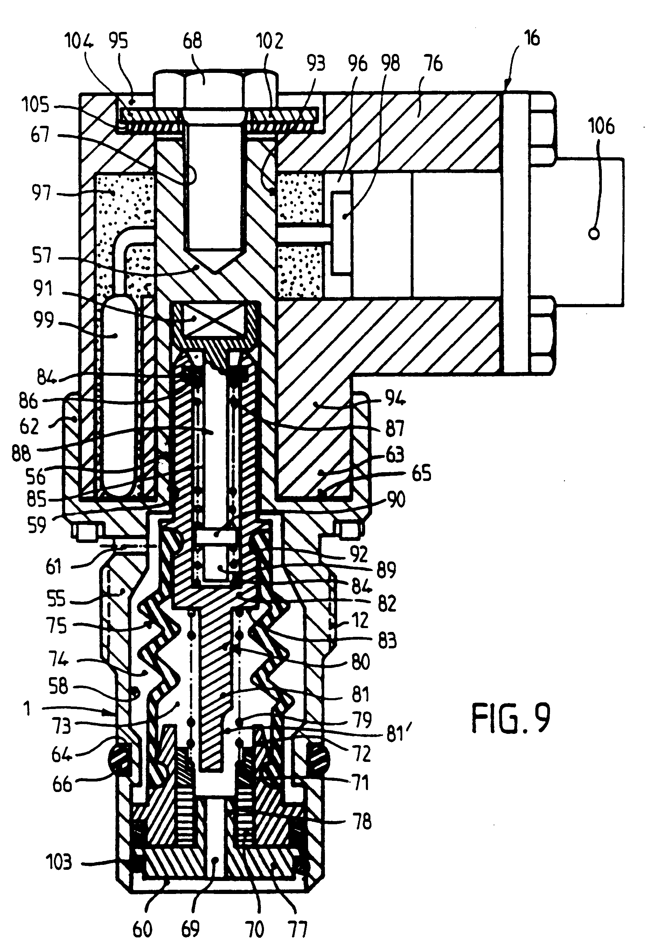

Sur les Fig. 4 à 7, on montre les différentes combinaisons possibles des éléments mobiles contenus dans le corps 1 de l'indicateur de colmatage et en Fig. 8, la courbe d'hystérisis du ressort 35 en fonction de la température.

La fig. 4 montre schématiquement les positions respectives du piston 28 et du témoin 40 à basse température (le ressort 35 en AMF étant mou) quand la différence de pression entre les chambres 5 et 7 est trop faible pour vaincre l'effet du ressort 27. Le plongeur 30 du piston 28 est alors repoussé par le ressort 27 vers le fond de son logement 2 et appuie fortement l'aimant 39 contre la membrane étanche 4. L'aimant 39 attire le barreau aimanté 41 (ou aimantable) du témoin 40 qui adhère à la membrane 4. L'effet de champ magnétique est supérieur à celui du ressort 46 et l'ensemble du témoin 40 reste dans son logement 3 et la bague 43 en peut pas sortir.

La Fig. 5 montre également schématiquement les positions respectives du piston 28 et du témoin 40 à basse température (ressort 35 mou) mais cette fois quand la différence de pression entre les chambres 5 et 7 est suffisante pour vaincre la force du ressort 27. Le plongeur 30 vient alors en 30' sous l'effet de la pression régnant dans la chambre 5.

La rondelle 52, solidaire du plongeur, est également déplacée vers le bas et comprime le ressort 35 entre elle et la nervure 38 de la tige 37 du porte-aiment 36. Le ressort 35 étant mou (dans le cas de la fig. 5 par suite d'une température basse), il ne peut pas repousser la nervure 38 vers le bas et, par suite, il ne peut pas "décoller" l'aimant 39 de la membrane 4. L'effort du champ magnétique est supérieur à celui du ressort 35. Le champ magnétique ne variant pas, le témoin 40 reste dans la position de la Fig. 4.

La fig. 6 montre la position du piston 28 et du témoin 40, à température élevée, quand la différence de pression entre les chambres 5 et 7 est insuffisante pour vaincre la force du ressort 27. Le plongeur 30 du piston 28 est alors repoussé par le ressort 27 vers le fond de son logement 2. Par contre, le ressort 35 en AMF est raide et occupe la totalité de l'espace compris entre la rondelle 52 et la nervure 38, sans déplacer la tige 37 par rapport à la membrane étanche 4. Le champ magnétique ne variant pas, le témoin 40 reste dans la position des fig. 4 et 5, la bague 43 non sortie.

La fig. 7 montre la position du piston 28 et du témoin 40 à température élevée, quand la différence de pression entre les chambre 5 et 7 est suffisante pour vaincre la force du ressort 27. Le plongeur 30 se déplace alors en 30' sous l'effet de la pression régnant dans la chambre 5. Le ressort 35 en AMF étant raide, il solidarise le porte-aiment 36 avec le piston 28, et lors de son déplacement entraîne ledit porte-aimant 39 vers le bas, avec l'aimant 39, lequel s'éloigne donc de la membrane 4. Le champ magnétique n'est plus suffisant pour attirer le barreau 41, l'ensemble du témoin 40 se soulève sous l'effet du ressort 46. La bague 43 sort du logement 3 et est très visible, simultanément le poussoir 49 ou 53 peut pénétrer dans la creusure 48 de la bague 43 et transmet l'information de cette nouvelle position à l'interrupteur 47.

Le fonctionnement de l'indicateur de colmatage selon l'invention peut, plus précisément encore être expliqué de la façon suivante :
Le détecteur communique avec le filtre (non représenté) par le canal 8 permettant au fluide de l'amont dudit filtre de remplir la chambre 5. La chambre 7 communique avec l'aval du filtre.

Le piston 28 est soumis en permanence à l'action du ressort de rappet 27, en direction du fond 4 du logement et, en cas de pression plus forte en chambre 5 qu'en chambre 2, à l'action de la différence de pression en sens opposé. Il en résulte que si la différnce de pression entre les chambres 5 et 7 est forte (filtre colmaté), le piston 28 recule jusqu'à venir buter sur la collerette 26 de la rondelle 25.

Le ressort 35 est réalisé en Alliage à Mémoire de Forme (AMF par exemple Nickel-Titane ou Cuivre-Zinc-Aluminium. Un tel ressort est raide aux températures dites chaudes (par exemple au-delà de 30°), et mou en-dessous, sous réserve du phénomène d'hystérésis. Lorsque la température passe de T1 à T2 le ressort devient raide à T2. Lorsque la température passe de T2 à T1, le ressort n'est plus raide en dessous de T1. Suivant le cas, le ressort est raide ou mou entre T1 et T2 (par exemple entre 30° et 40°). En général la viscosité du fluide ne varie pas sensiblement entre 30° et 40 ° et le fonctionnement n'est pas perturbé par le phénomène d'hystérésis.

Le porte-aimant 36 est soumis à deux forces, celle due au ressort 35 en AMF et la force d'aimantation produite par l'aimant 39 sur l'aimant ou le barreau magnétique 41 à travers la membrane 4.

Lorsqu'il y a colmatage et lorsque le ressosrt 35 passe d'une température basse à une température élevée, il arrive à vaincre la force d'aimantation et à faire reculer le porte-aimant 36, provoquant un entrefer non négligeable entre l'aimant 39 et le barreau 41. L'effet magnétique étant supprimé, le ressort 46 repousse alors le témoin 40 avec sa bague colorée 43. Cette position est représentée schématiquement en Fig. 7. A ce moment le poussoir 49 tombe dans la creusure 48 et l'interrupteur 49 change d'état, sous l'effet d'un ressort interne. Ce changement d'état indique le colmatage du filtre à distance.

Lorsque le ressort 35 est froid et mou, la force d'aimantation est supérieure à la force qu'il exerce sur le porte-aimant 36 qui reste immobile, appuyé contre la membrane 4, et le témoin 40 reste en place, ce qui est schématisé en Fig. 5.

Lorsque la pression entre les chambres 5 et 7 est faible et exerce une force inférieure à celle exercée parde ressort 27, le piston 28 reste en position haute, ainsi que représenté en Fig. 4.

Lorsque le témoin 40 est sorti, il reste sorti jusqu'à son réarmement manuel. Pour réarmer il faut se trouver dans le cas représenté en Fig. 4.

En conclusion, outre la facilité de fabrication, l'utilisateur du ressort axial à spires 35 en AMF permet de laisser l'indicateur de colmatage hors service aux basses températures sans avoir beson d'un dispositif d'arrêt devant appuyer contre la paroi (et/ou une creusure) latérale d'un élément mobile, et formant frein, préjudiciable au bon fonctionnement dudit indicateur de colmatage.

Selon l'invention, à température élevée, l'indicateur de colmatage qui s'est mis automatiquement en service (fig. 6), peut passer brutalement en position ALARME sans risque d'arrêt dans une position intermédiaire (Fig. 7). Ainsi cet indicateur de colmatage constitue un progrès substantiel dans la sûreté de l'information donnée et par suite il apporte une sécurité supplémentaire importante dans les appareils qui l'utilisent, notamment dans les avions.

Selon la présente invention, d'autres modes de réalisation d'indicateur de colmatage sont possibles, comportant l'utilisation d'un ressort à spires en AMF, dans les mêmes conditions.

Un mode de réalisation est représenté en Fig. 9 à 15, en se reportant à la Fig. 9, on voit que, extérieurement, l'indicateur de colmatage est constitué par un corps 1 et un élément supérieur 16, appelé coiffe, réunis par une vis 68.

Le corps 1 comprend une partie cylindrique inférieure 55 surmontée d'une partie cylindrique 56 de plus petit diamètre avec, à la jonction de ces deux parties, une coupelle 62 déterminant une gouttière 63 circulaire ouverte en direction de l'extrémité haute du cylindre 56. Sur la partie 55, une zone filetée 12 est prévue pour permettre la fixation de l'indicateur sur son support (non représenté). Entre cette partie filetée 12 et la coupelle 63 la paroi de la partie 55 est percée par un canal 61. Entre la partie filetée 12 et son extrémité inférieure 60, la partie 55 comporte une rainure circulaire 64 dans laquelle est logé un joint torique 66.

Le corps 1 est réalisé en un ou plusieurs éléments, en matière non magnétique (aluminium par exemple) et il est alésé axialement à chaque extrémité pour déterminer d'une part un trou 67 ouvert vers le haut. Ce dernier est taraudé pour permettre de visser la vis 68 dans le corps 1. Le logement 58 est creusé dans la partie 55 inférieure du corps 1 et, en continuité dans le même axe, est creusé le logement 59 de plus faible diamètre, dans la partie 56 dudit corps 1. Entre le fond du logement 59 et du trou 67 subsiste une cloison 57 les séparant totalement.

Le logement 58 est, à sa partie inférieure 60, fermé par une rondelle 77 dont le bord de l'orifice central est relevé suivant une collerette 78 laissant un passage 69. Cette rondelle 77 est fixée par sa périphérie à la base ouverte du logement 58 grâce à un anneau d'arrêt métallique 103. La collerette 78 est entourée par un petit cylindre 70 formé de rondelles superposées permettant un éventuel réglage en hauteur en faisant varier le nombre desdites rondelles. Le petit cylindre 70 est muni, à sa partie supérieure d'un guide-ressort 71 comportant un épaulement. Entourant ce petit cylindre 70, une autre pièce cylindrique 72 est disposée de façon étanche dans l'extrémité inférieure 60 du logement 58, juste au-dessus de la rondelle 77.

Le mécanisme de détection de l'indicateur est disposé dans les logements 58 et 59, entre leurs extrémités basse 60 et haute 57. Il comprend essentiellement un piston 80 et un porte-aimant 88, ayant le même axe et pouvant se déplacer légèrement l'un par rapport à l'autre.

Ce piston 80 est en deux parties principales : 81 inférieure, et 82 supérieure (d'un plus grand diamètre), déterminant entre elles un épaulement 83 bien visible sur la Fig. 9. La partie inférieure 81 est d'une longueur telle, qu'en position extrême basse elle vienne buter contre la partie supérieure de la collerette 78. A son extrémité inférieure, la partie 81 comporte une échancrure 81' de façon à ne pas obstruer le passage 69 en position de butée. Un ressort classique à boudin 79 entoure cette partie 81 du piston 80, et il s'appuye d'une part sur l'épaulement du guide-ressort 71 à sa base, et d'autre part sur l'épaulement 83 à son sommet.

De haut en bas la partie supérieure 82 du piston 80 est alésée axialement pour déterminer un logement 85, et une gorge circulaire 86 et creusée près de son ouverture pour la mise en place d'une rondelle dite d'obturation référencée 84, en deux parties, retenant un ressort 87 en Alliage à Mémoire de Forme (AMF) dont les caractéristiques et le rôle très important seront décrits plus en détail ultérieurement. A l'intérieur du logement 85 peut coulisser la tige 89 du porte-aimant 88. A proximité de la base libre de cette tige 89, se trouve une nervure 90 déterminant à la partie supérieure un épaulement d'arrêt pour le ressort 87 en AMF et à sa partie inférieure un autre épaulement contre lequel appuye un ressort antagoniste 92. L'extrémité opposée de ce ressort 92 repose sur le fond du logement 85 du piston. En outre la nervure 90 peut constituer un moyen de guidage de la tige 89 dans le logement 85. La partie supérieure de cette tige 89 est évidée en forme de coupelle (non référencée), laquelle se présente extérieurement au-delà de la partie supérieure 82 du piston 80. La coupelle contient l'aimant.

Le logement 58 est divisé en deux chambres 73 et 74 par un soufflet cylindrique étanche en élastomère 75. Ce soufflet 75 est fixé d'une part à sa partie inférieure sur la pièce cylindrique fixe 72 et à sa partie supérieure à la base de la partie 82 du piston (mobile) 80, la chambre 74 entoure le soufflet 75, la partie 82 du piston 80 ainsi que le porte-aimant 88 et l'aimant 91. Elle communique avec l'amont du filtre par le canal 61. La chambre 73 comprise à l'intérieur du soufflet 75 entoure la partie inférieure 81 du piston 80 et elle communique avec l'aval du filtre par le passage 69 prévu dans la rondelle de fermeture 77. L'aval et l'amont du filtre sont également isolés par le joint 66.

La coiffe 16 est percée d'un trou approprié 93 pour être enfoncée autour de la partie supérieure 56 du corps 1. Cette coiffe 16 comporte une base cylindrique 94 agencée pour être logée dans la gouttière 63. La profondeur de cette gouttière est réglable à l'aide de rondelles 65. A la partie supérieure du trou 93 est prévu un avanttrou 95 permettant de loger les rondelles de blocage 104 et la tête de la vis 68 de fixation. La base cylindrique 94 comporte au moins un logement dans lequel est disposé un micro-interrupteur sensible à la position d'un aimant. Sur la Fig. 9 on a représenté une ampoule 99, dite aussi interrupteur à lames souples (ILS), vulgairement appelé "relai reed". Le contact se ferme ou non sous l'effet de la variation du champ magnétique produit par l'aimant 91. Avantageusement l'ampoule 99 est entourée d'une matière protectrice non métallique 97. Elle est reliée de façon connue à un dispositif de connexion électrique approprié 98 logé dans un appendice 76 de la coiffe 16. Sur la Fig. 9 on a représenté un dispositif à baillonnette 106 à titre d'exemple.

Selon une variante de réalisation, la coiffe peut comporter plusieurs ampoules 100-101 disposées à des hauteurs différentes le long du pourtour de la partie cylindrique 56, entourant le logement 59.

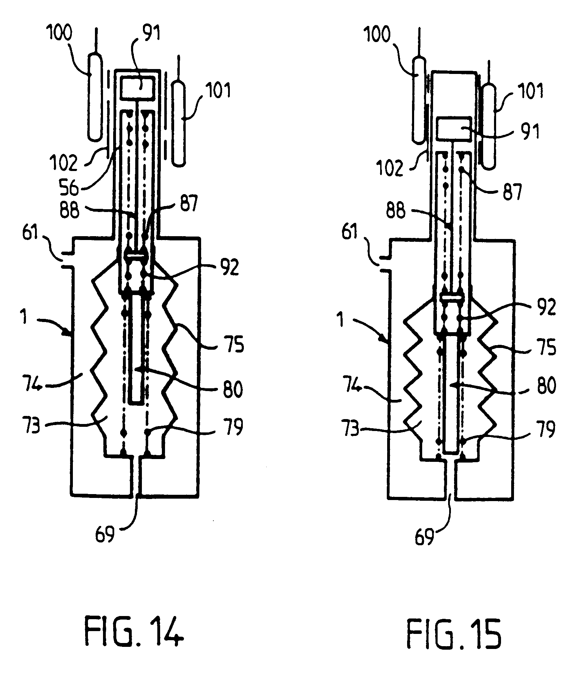

Au cours de son déplacement (voir fig. 14 et 15) l'aimant 91 agira successivement sur les lames des ampoules 100-101 permettant ainsi de surveiller la position dudit aimant 91. Cette position est fonction de la différence de pression entre l'amont et l'aval du filtre lorsque la température est suffisante. Pour éviter que le flux magnétique de l'aimant 91 influence simultanément deux ampoules successives, il y a lieu d'entourer la partie cylindrique 56 par une chemise métallique 102 de faible épaisseur et comportant une lumière judicieusement disposée face à chaque ampoule, de façon à ne laisser passer le flux magnétique que par les lumières.

Le fonctionnement de l'indicateur de colmatage selon l'invention peut, plus précisément encore être expliqué de la façon suivante :
Le détecteur communique avec le filtre (non représenté) par le canal 61 permettant à la pression du fluide en amont dudit filtre de s'établir de façon identique dans la chambre 74. La chambre 73 communique avec l'aval du filtre par le passage 69.

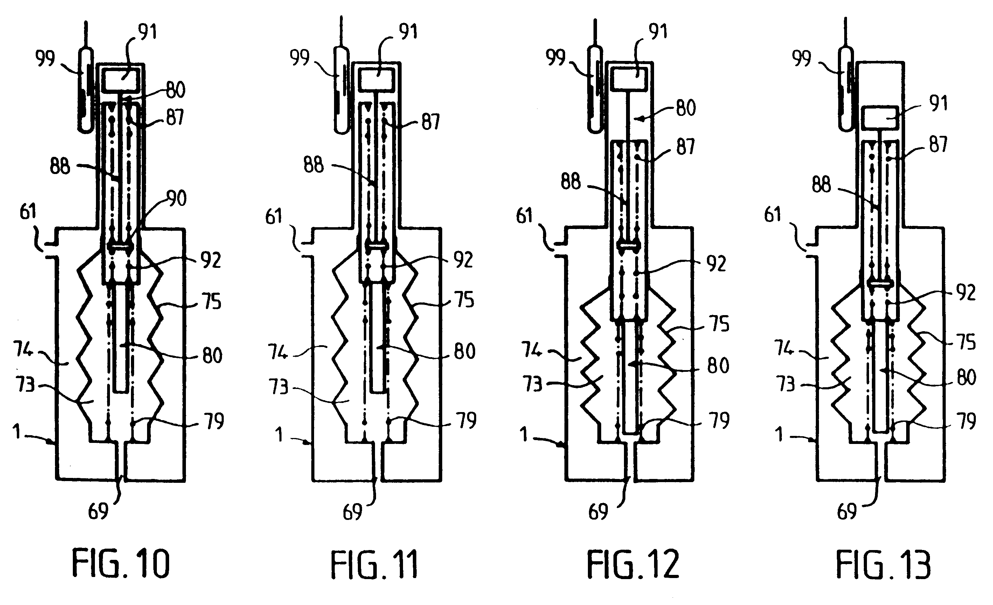

Le piston 80 est soumis en permanence à l'action du ressort de rappel 79, en direction du fond 57 du logement 58 et, en cas de pression plus forte en chambre 74 qu'en chambre 73, à l'action de la différence de pression en sens opposé audit ressort 79. Il en découle que, à température suffisante, si la force résultant de la différence de pression entre les chambres 74 et 73 devient supérieure à la force exercée par le ressort 79 sur le piston 80, ledit piston 80 commence alors à reculer (fig. 12 et 13). En ajustant la force exercée par le ressort 79 sur le piston 80, au moyen des rondelles 70, on peut modifier le seuil de déclenchement du déplacement dudit piston 80. Si la différence de pression croît fortement la course du piston 80 est limitée par la butée que constitue la collerette 78.

Le ressort 87 est réalisé en Alliage à Mémoire de Forme (AMF) par exemple à bas de Nickel-Titane ou Cuivre-Zinc-Aluminium. Un tel ressort est raide aux températures dites chaudes (par exemple au-delà de 30°), et mou en dessous, sous réserve du phénomène d'hystérésis. Lorsque la température passe de T1 à T2 le ressort devient raide à T2. Lorsque la rempérature passe de T2 à T1, le ressort n'est plus raide en dessous de T1. Suivant les cas, le ressort est raide ou mou entre T1 et T2 (par exemple entre 30 ° et 40 ° Celsius). En général la viscosité du fluide ne varie pas sensiblement entre 30 ° et 40° et le fonctionnement n'est pas perturbé par le phénomène d'hystérésis.

Le porte-aimant 88 est soumis à deux forces, celle dûe au ressort 87 en AMF et celle produite par le ressort 92, disposés de chaque côté de la nervure circulaire 90. Lorsque la force exercée par le ressort AMF 87 dépasse celle exercée par le ressort classique 92, le porte-aimant se trouve solidarisé avec le piston 80. Dans le cas contraire, lorsque la force exercée par le ressort AMF 87 est inférieure à celle exercée par le ressort classique 92, ce dernier repousse vers le haut la nervure 90 et tout le porte-aimant 88 jusqu'à ce que la coupelle et/ou l'aimant 91 viennent buter contre la cloison 57, quelque soit la position du piston 80.

Les ressorts 87 et 92 sont conçus de telle façon que pour les températures supérieures à T2, le ressort 92 exerce sur le porte-aimant 88 une force nettement inférieure à celle du ressort AMF 87, et que pour les températures inférieures à T1, le ressort 92 exerce une force une force nettement supérieure au ressort AMF 87.

Lorsqu'il n'y a pas de colmatage, le piston 80 étant en position haute, le porte-aimant 88 l'est également, fig. 10 et 11, quelque soit la température.

Dès qu'un colmatage se produit, le piston 80 recule et, dans le cas d'un ressort chaud, le porte-aimant 88 et l'aimant 91 reculent également, Fig. 12, provoquant une variation du champ magnétique. L'ampoule 99 est alors actionnée par cette variation du champ magnétique, fermant ainsi un circuit électrique. Selon l'exemple des Fig. 14 et 15, l'ampoule 99 est remplacée par deux ampoules 100 et 101 disposées à deux niveaux différents, le flux magnétique influence d'abord l'ampoule 100, puis l'ampoule 101 lorsque le colmatage est net. Il serait possible d'avoir un nombre d'ampoules supérieur à deux, afin de suivre avec précision l'évolution du colmatage ou du décolmatage.

Sur les figures on a représenté le cas où le signal est obtenu par fermeture d'un circuit électrique, mais il est bien évident que l'inverse est également possible.

Dans te cas d'une température basse (par exemple inférieure à 30° ) le ressort en AMF 87 est mou et le porte-aimant 88 se trouve désolidarisé d'avec le piston 80, fig. 10 et 11. La fig. 10 représente le cas où le filtre n'est pas colmaté et le ressort 92 repousse le piston 80 vers le haut. La fig. 12 représente au contraire le cas de colmatage (à froid) où la différence de pression entre les chambres 73 et 74 repousse le piston vers le bas, mais sans entraîner l'aimant 91 appliqué contre la cloison 57. La position de l'aimant 91 est donc identique dans ce cas à celui où le piston 80 est en position haute, c'est-à-dire lorsqu'il n'y a pas de colmatage. A basse température (par exemple au-dessous de 30°) le détecteur de colmatage est hors service, fig. 10 et 11.

## Revendications

1. Indicateur de colmatage de filtre au passage d'un fluide du type comportant un corps creux (1) en une matière couramment appelée amagnétique, un piston (28, 80) déplaçable dans un logement (5-6, 58-59) approprié dudit corps (1), un aimant (39, 91) monté sur le piston (28, 80) et un dispositif (40, 99) détectant la position de l'aimant (39, 91), indicateur de colmatage caractérisé par le fait que ledit aimant (39) porté ou non par un porte-aimant (36) est déplaçable axialement par rapport au piston (28) et un ressort (35) en Alliage à Mémoire de Forme (AMF) raide au-dessus d'une température déterminée et souple en-dessous est monté entre une butée solidaire du piston (28) et une butée solidaire de l'aimant (39), de sorte que le ressort (35) solidarise en déplacement l'aimant (39) avec le piston (28) lorsqu'il est au-dessus de ladite température déterminée, alors qu'il autorise par compression un déplacement axial de l'aimant (39) par rapport au piston (28) en-dessous de cette température.

2. Indicateur de colmatage selon la revendication 1, caractérisé par le fait que le corps (1) est sensiblement cylindrique (en un ou plusieurs éléments) muni extérieurement des moyens de fixation (12-13) et a fait l'objet d'alésages et contre-alésages ayant le même axe et déterminant deux logements dits supérieur (3) et inférieur (2), ouverts chacun à une extrémité opposée du cylindre :
- le logement dit supérieur (3) étant occupé par un témoin aimanté (40) (ou aimantable) mobile avec son dispositif d'assujettissement, à l'intérieur dudit logement lequel est sous pression atmosphérique,
- le logement dit inférieur (2), communiquant en haute partie (5) avec l'amont du filtre et en partie basse (7) avec l'aval, étant occupé par :
- un piston (28) divisant le logement en deux chambres dites haute (5) et basse (7),
- un aimant (39), avec son porte-aimant (36) dans la chambre haute (5),
- un ressort de rappel (27) du piston (28) vers le fond (4) de son logement (2), et placé dans la chambre basse (7),
la chambre dite haute (5) du logement dit inférieur (2) comportant en outre un ressort à spires (35) en Alliage de Mémoire de Forme (AMF), raide à température élevée et mou à basse température et pouvant être comprimé à basse température sous l'effet d'une force insignifiante, suivant le même axe rectiligne que le piston (28), et agencé de façon qu'il solidarise ou non l'aimant (39) au piston (28) selon que la température est élevée ou non.

3. Indicateur de colmatage selon la revendication 2, caractérisé par le fait que les logements supérieur et inférieur (2 et 3) sont séparés par une membrane (4) étanche venue d'usinage dont l'épaisseur est comprise entre 2/10 et 10/10 de millimètre.

4. Indicateur de colmatage selon l'une quelconque des revendications précédentes, caractérisé par le fait que la partie inférieure (7) du logement inférieur (2) est fermée par une rondelle (25) dont le bord de l'orifice central est relevé suivant une collerette (26) servant de guide au ressort de rappel (27) du piston (28).

5. Indicateur de colmatage selon l'une quelconque des revendications précédentes, caractérisé par le fait que le piston (28) présente extérieurement deux parties principales (29 et 30) déterminant entre elles un épaulement (31) contre lequel appuie le ressort (27), la partie (30) étant munie d'un joint d'étanchéité torique (32), le piston (28) étant en outre alésé axialement à partir de sa tête de façon à déterminer un logement (33), une gorge circulaire (34) étant creusée prés de son ouverture.

6. Indicateur de colmatage selon l'ensemble des revendications précédentes, caractérisé par le fait que le porte-aimant (36) est formé, d'une part, par une tige axiale (37) comportant une nervure circulaire (38) près de son extrémité inférieure libre et, d'autre part, par une coupelle (50) à sa partie supérieure contenant l'aimant (36).

7. Indicateur de colmatage selon les revendications 5 et 6, caractérisé par le fait que le ressort (35) en Alliage à Mémoire de Forme (AMF) entoure la tige (37) du porte-aimant (36) et est compris entre la nervure circulaire (38) de ladite tige (37) et une rondelle ou un jonc d'arrêt (52) placé dans la gorge (34) du piston (28).

8. Indicateur de colmatage selon l'une quelconque des revendications précédentes, caractérisé par le fait que le ressort en AMF est en alliage de Nickel-Titane.

9. Indicateur de colmatage selon l'une quelconque des revendications 1 à 6, caractérisé par le fait que le ressort en AMF est en alliage de Cuivre-Zinc-Aluminium.

10. Indicateur de colmatage selon la revendication 2, caractérisé par le fait que le logement supérieur (3) est en deux parties (9 et 10), une première partie (9) faisant face à la chambre (5) de l'autre côté de la membrane (4), et une partie (10) haute de plus grand diamètre s'ouvrant largement sur l'extérieur.

11. Indicateur de colmatage selon l'une des revendications 1, 2 et 9, caractérisé par le fait que le corps (1) est muni extérieurement d'une pièce (16) comprenant une partie coiffante du corps (1), formant bouchon (23) du logement supérieur (3), percé en son centre pour laisser le passage à une bague (43) de témoin (40).

12. Indicateur de colmatage selon l'une des revendications 1, 2, 9 et 10, caractérisé par le fait que la pièce (16) peut tourner autour de la paroi extérieure de la partie haute du corps (1), et qu'à cet effet une gorge (14) a été creusée dans ledit corps au-dessus de la collerette (13), tandis qu'une autre gorge (17) a été creusée à la base interne du bouchon (23), un jonc (15) logé dans ces deux gorges assurant la liaison de la pièce (16) sur le corps (1).

13. Indicateur de colmatage selon l'une des revendications 1, 2 et 9 à 11, caractérisé par le fait que la partie coiffante (23) de la pièce (16) est percée de part en part de façon à former deux passages (18 et 19) successifs ayant le même axe et déterminant entre eux un épaulement (20) faisant face à la partie terminale supérieure du corps (1) et dépassant au-dessus de la chambre (10).

14. Indicateur de colmatage selon l'une quelconque des revendications 1 à 13, caractérisé par le fait que, dans le logement supérieur (3), est disposé un ensemble d'éléments (40) assujettissant le témoin de colmatage, comprenant une tige (42) munie à sa base d'un aimant (41) pouvant être appliqué contre la membrane (4), une bague (43) de couleur vive différente des autres pièces comprenant une collerette externe (44) pouvant prendre appui contre l'épaulement (20) du bouchon (23), une creusure circulaire externe (48), une nervure circulaire interne (45) (formant épaulement en partie haute), un ressort de rappel (46) entourant la tige (42) entre la membrane (4) et la nervure (45).

15. Indicateur de colmatage selon l'une des revendications 1 et 2, caractérisé par le fait que la pièce (16) comporte un appendice (24) avec une chambre (21) pour loger un interrupteur (49), le fond de la chambre (21) étant traversé par un canal (22) dans lequel peut coulisser une entretoise formant poussoir (53) normalement repousser par le bouton-poussoir d'un interrupteur contre la paroi de la bague (43) éventuellement dans la creusure (48), selon la position de ladite bague.

16. Indicateur de colmatage selon la revendication 1, caractérisé par le fait que l'aimant (91) porté par un porte-aimant (88) coopérant avec la tête (82) du piston (80) est déplaçable par rapport à ce dernier en fonction des forces antagonistes de deux ressorts, l'un (87) en Alliage à Mémoire de Forme (AMF) raide au-dessus d'une température déterminée et souple en-dessous, l'autre (82) en alliage classique ayant une force inférieure à celle du ressort (87) chaud mais supérieure à celle de ce même ressort (87) froid, et des moyens pour agencer les ressorts de façon qu'à chaud le ressort (87) en AMF solidarise le porte-aimant (88) au piston (80), tandis qu'à froid, le ressort (92) classique repousse le porte-aimant (88).

17. Indicateur de colmatage selon la revendication 16, caractérisé par le fait que le logement (58-59) est ouvert vers le bas, l'aimant (91) étant dirigé vers le fond dudit logement (58-59) divisé par un moyen (75) en deux chambres (73-74), l'une dite basse (73) communiquant avec l'aval d'un filtre, l'autre dite haute (74) communiquant par l'amont dudit filtre, de telle manière que si la pression dans la chambre haute (74) devient supérieure à celle de la chambre basse (73), il se produit une différence de pression pouvant dépasser une certaine valeur provoquant alors le déplacement du piston (80), et un moyen pour détecter hors du logement (5) la position de l'aimant (91), ledit moyen de détection étant constitué par au moins une ampoule (99) à lames souples sensibles au flux magnétique, et relié à un dispositif électrique approprié.

18. Indicateur de colmatage selon la revendication 16, caractérisé par le fait que le porte-aimant (88) comprend une tige (89) munie d'une nervure circulaire (90) et que le ressort en AMF (87) appuie sur la face supérieure de ladite nervure (90) et le ressort classique (92) sur la face inférieure de celle-ci.

19. Indicateur de colmatage selon l'une quelconque des revendications 16 et 18, caractérisé par le fait que le piston (80) comporte un alésage axial (85) avec une gorge circulaire (86), muni d'une rondelle (84), un ressort (87) en Alliage à Mémoire de Forme (AMF) compris entre la nervure (90) et la rondelle (84), le ressort calibré de rappel (92) étant interposé entre la nervure (90) et le fond du logement (58).

20. Indicateur de colmatage selon l'une quelconque des revendications 16 à 19, caractérisé par le fait que le corps (1) comporte un logement axial en deux parties, basse (58) et haute (59), et un piston (80) en deux parties, basse (81) et haute (82), le logement étant divisé en deux chambres dites basse (73) et haute (74) à l'aide d'une cloison (75) étanche et flexible formée par un soufflet en élastomère fixé, d'une part, à la base de la partie haute (82) du piston (80) d'autre part, à un dispositif fermant la base (60) du logement (58).

21. Indicateur de colmatage selon l'une quelconque des revendications 16 à 20, caractérisé par le fait que le corps (1) est surmonté d'une partie formant coiffe (16) laquelle coiffe comporte au moins deux interrupteurs (100-101) sensibles au flux magnétique, telles que des ampoules disposées à des niveaux différents le long de la périphérie du corps (1).

22. Indicateur de colmatage selon la revendication 21, caractérisé par le fait qu'une chemise métallique de faible épaisseur est interposée entre le corps (1) et les ampoules (100-101) avec une fenêtre par ampoule.

## Claims

1. An indicator showing when a fluid filter is clogged, the indicator being of the kind comprising a hollow body (1) made of a material conventionally called non-magnetic, a piston (28, 80) movable in a suitable recess (5 - 6, 58 - 59) in the body (1), a magnet (39, 91) mounted on the piston (28, 80) and a device (40, 99) for detecting the position of the magnet (39, 91), the clogging indicator being characterised in that the magnet (39), which may or may not be on a magnet-holder (36), is movable axially with respect to the piston (28), and a spring (35) made of Shape Memory Alloy (French abbreviation AMF) and stiff above a given temperature and flexible below is mounted between an abutment secured to the piston (28) and an abutment secured to the magnet (39), so that the spring (35) causes the magnet (39) to move fixedly with the piston (28) when above the given temperature, whereas below this temperature the spring can be compressed so that the magnet (39) moves axially relative to the piston (28).

2. A clogging indicator according to claim 1, characterised in that the body (1) is substantially cylindrical (in one or more components) and externally provided with securing means (12, 13) and formed with bores and counter-bores having the same axis and defining an upper recess (3) and a lower recess (2), each opening at an opposite end of the cylinder:
- the upper recess (3) being occupied by a magnetised (or magnetisable) monitor (40) movable together with its securing device inside the recess, which is at atmospheric pressure,
- the lower recess (2) communicating at the top (5) with the upstream part of the filter and at the bottom (7) with the downstream part, and occupied by:
- a piston (28) which divides the recess into an upper chamber (5) and a lower chamber (7),
- a magnet (39) and magnet-holder (36) in the upper chamber (5), and
- a spring (27) for returning the piston (28) towards the bottom (4) of its recess (2), the spring being disposed in the lower chamber (7),
the upper chamber (5) of the bottom recess (2) also comprising a spiral spring (35) made of Shape Memory Alloy (AMF) and stiff at elevated temperature and soft at low temperature and compressible at low temperature by an insignificant force, along the same rectilinear axis as the piston (28), and adapted to secure the magnet (29) to the piston (28) if the temperature is elevated, but not otherwise.

3. A clogging indicator according to claim 2, characterised in that the upper and lower recesses (2 and 3) are separated by a sealing-tight machined diaphragm (4) between 2/10 and 10/10 of a millimetre thick.

4. A clogging indicator according to any of the preceding claims, characterised in that the bottom part (7) of the lower recess (2) is closed by a washer (25) having a central orifice, the edge of which is raised along a collar (26) serving as a guide to the spring (27) for returning the piston (28).

5. A clogging indicator according to any of the preceding claims, characterised in that the piston (28) has two external main parts (29, 30) which between them define a shoulder (31) against which the spring (27) bears, the part (30) being provided with an O-ring (32) and the piston (28) also being axially bored, starting from its head, so as to define a recess (33), a circular groove (34) being formed near the opening of the recess.

6. A clogging indicator according to the previous set of claims, characterised in that the magnet-holder (36) is formed on the one hand by an axial rod (37) comprising a circular rib (38) near its bottom free end and, on the other hand, by a cup (50) at its top part containing the magnet (36).

7. A clogging indicator according to claims 5 and 6, characterised in that the spring (35) made of Shape Memory Alloy (AMF) surrounds the rod (37) of the magnet-holder (36) and is disposed between the circular rib (38) on the rod (37) and a washer or circlip (52) placed in the groove (34) of the piston (28).

8. A clogging indicator according to any of the preceding claims, characterised in that the AMF spring is made of nickel-titanium alloy.

9. A clogging indicator according to any of claims 1 to 6, characterised in that the AMF spring is made of copper-zinc-aluminium alloy.

10. A clogging indicator according to claim 2, characterised in that the upper recess (3) is in two parts (9 and 10), a first part (9) facing the chamber (5) of the other side of the diaphragm (4), and a larger-diameter top part (10) which is mainly open to the exterior.

11. A clogging indicator according to any of claims 1, 2 and 9, characterised in that the body (1) has an external component (16) comprising a cover part of the body (1) forming a plug (23) on the top recess (3) and perforated at its centre to provide clearance for a ring (43) of a monitor (40).

12. A clogging indicator according to any of claims 1, 2, 9 and 10, characterised in that the component (16) can rotate around the outer wall of the top part of the body (1), and to this end a groove (14) is made in the body above the collar (13), whereas another groove (17) is made in the inner base of the plug (23), and a circlip (15) is disposed in the two grooves so as to connect the component (16) to the body (1).

13. A clogging indicator according to any of claims 1, 2 and 9 - 11, characterised in that the cover part (23) of the component (16) is perforated on either side so as to form two successive passages (18, 19) having the same axis and between them defining a shoulder (20) which faces the upper end part of the body (1) and projects above the chamber (10).

14. A clogging indicator according to any of claims 1 to 13, characterised in that the upper recess (3) contains a set of components (40) for securing the clogging monitor and comprising a rod (42) bearing a magnet (41) at its bottom for pressing against the diaphragm (4), a ring (43) having a bright colour different from the other components and comprising an outer collar (44) for pressing against the shoulder (20) of the plug (23), an outer circular hollow (48), an inner circular rib (45) (forming a shoulder at the top), and a return spring (46) surrounding the rod (42) between the diaphragm (4) and the rib (45).

15. A clogging indicator according to claim 1 or 2, characterised in that the component (16) has an extension (24) with a chamber (21) for receiving a switch (49), the bottom of the chamber (21) being perforated by a duct (22) in which a cross-member can slide and constitutes a push rod (53) which is normally pushed by the push-button of a switch against the wall of the ring (43), optionally in the hollow (48), depending on the position of the ring.

16. A clogging indicator according to claim 1, characterised in that the magnet (91) carried by a magnet-holder (88) co-operating with the head (82) of the piston (80) is movable with respect to the piston- head in dependence on the opposing forces of two springs, one spring (87) being made of Shape Memory Alloy (AMF) and stiff above a given temperature and flexible below, and the other spring (82) being made of conventional alloy and weaker than the spring (87) when hot but stronger than the same spring (87) when cold, and means for actuating the springs so that when hot, the AMF spring (87) secures the magnet-holder (88) to the piston (80), whereas when cold, the conventional spring (92) pushes the magnet-holder (88) back.

17. A clogging indicator according to claim 16, characterised in that the recess (58 - 59) is open towards the bottom, the magnet (91) extending towards the bottom of the recess (58 - 59) divided by a means (75) into two chambers (73 - 74), a lower chamber (73) communicating with the downstream part of a filter whereas an upstream chamber (74) communicates with the upstream part of the filter, so that if the pressure in the upper chamber (74) becomes greater than the pressure of the lower chamber (73), a pressure difference results and may exceed a certain value at which the piston (80) moves, and a means for detecting the position of the magnet (91) outside the recess (5), the detection means comprising at least one lamp (99) having flexible elements sensitive to the magnetic flux and connected to a suitable electric device.

18. A clogging indicator according to claim 16, characterised in that the magnet-holder (88) comprises a rod (89) provided with a circular rib (90), and the AMF spring (87) presses the upper surface of the rib (90) and the conventional spring (92) presses the lower surface thereof.

19. A clogging indicator according to claim 16 or 18, characterised in that the piston (80) has a central bore (85) with a circular groove (86) provided with a washer (84), a Shape Memory Alloy (AMF) spring (87) being disposed between the rib (90) and the washer (84) and the calibrated return spring (92) being interposed between the rib (90) and the bottom of the recess (58).

20. A clogging indicator according to any of claims 16 to 19, characterised in that the body (1) has an axial recess in two parts, a bottom part (58) and a top part (59), and a piston (80) in two parts, a bottom part (81) and a top part (82), the recess being divided into a lower chamber (73) and a upper chamber (74) by a flexible sealing-tight partition (75) formed by an elastomeric bellows secured at one end to the base of the top part (82) of the piston (80) and at the other end to a device closing the base (60) of the recess (58).

21. A clogging indicator according to any of claims 16 to 20, characterised in that the body (1) is surmounted by a part forming a cover (16) and comprising at least two switches (100 - 101) sensitive to the magnetic flux, such as lamps disposed at different levels along the periphery of the body (1).

22. A clogging indicator according to claim 21, characterised in that a thin metal jacket is interposed between the body (1) and the lamps (100 - 101), with one opening for each lamp.

## Patentansprüche

1. Verschmutzungsanzeiger für Filter im Durchfluß einer Flüssigkeit, bestehend aus einem Hohlkörper (1) aus einem allgemein als unmagnetisch bezeichneten Werkstoff, einem in einer geeigneten Aufnahme (5-6, 58-59) dieses Körpers (1) beweglichen Kolben (28, 80), einem auf den Kolben (28, 80) montierten Magneten (39,91) und einer Vorrichtung (40, 99) zur Erkennung der Stellung des Magneten (39, 91), dadurch gekennzeichnet, daß der durch einen Magnetträger (36) getragene oder nicht getragene Magnet (39) axial zum Kolben (28) verschiebbar ist, und daß eine oberhalb einer bestimmten Temperatur harte und unterhalb dieser Temperatur weiche Feder (35) aus einer Legierung mit Form-Gedächtnis (LFG) zwischen einem formschlüssig mit dem Kolben (28) verbundenen Anschlag und einem formschlüssig mit dem Magneten (39) verbundenen Anschlag montiert ist, so daß die Feder (35) durch Verschiebung des Magneten (39) Formschluß mit dem Kolben (28) herstellt, wenn sie über der erwähnten bestimmten Temperatur liegt, während sie unter dieser Temperatur durch Kompression eine axiale Verschiebung des Magneten (39) zum Kolben (28) zuläßt.

2. Verschmutzungsanzeiger nach Anspruch 1, dadurch gekennzeichnet, daß der Körper (1) deutlich zylindrisch (in einem oder mehreren Elementen) ist, daß er außen mit den Befestigungsmitteln (12-13) versehen ist, und daß er Bohrungen und Gegenbohrungen gleicher Mitte erhalten hat, welche zwei als obere (3) und untere (2) bezeichnete Aufnahmen bilden, die jede zu einem entgegengesetzten Ende des Zylinders hin geöffnet sind:
- in der oberen Aufnahme (3) befindet sich ein beweglicher magnetisierter (oder magnetisierbarer) Melder (40) mit seiner Befestigungsvorrichtung innerhalb der vorerwähnten Aufnahme, welche unter atmosphärischem Druck steht,
- in der unteren Aufnahme (2), die in ihrem oberen Teil (5) mit der Einlaufseite des Filters und im unteren Teil (7) mit dessen Auslaufseite kommuniziert, befindet sich:
- ein Kolben (28), der die Aufnahme in zwei als obere (5) und untere (7) bezeichnete Kammern unterteilt,
- ein Magnet (39) mit seinem Magnetträger (36) in der oberen Kammer (5),
- eine in der unteren Kammer (7) angeordnete Rückholfeder (27) des Kolbens (28) zum Boden (4) seiner Aufnahme (2),
wobei die obere Kammer (5) der unteren Aufnahme (2) außerdem eine Spiralfeder (35) aus einer Legierung mit Formgedächtnis (LFG) enthält, die bei hoher Temperatur hart und bei niedriger Temperatur weich ist, und die bei niedriger Temperatur unter Einwirkung einer unbedeutenden Kraft entsprechend der gleichen geraden Achse wie der Kolben (28) zusammengedrückt werden kann, und die so eingerichtet ist, daß sie zwischen dem Magneten (39) und dem Kolben (28) Formschluß herstellt oder nicht, je nachdem, ob die Temperatur hoch ist oder nicht.

3. Verschmutzungsanzeiger nach Anspruch 2, dadurch gekennzeichnet, daß die obere und die untere Aufnahme (2 und 3) durch eine mechanisch bearbeitete Membran (4) getrennt sind, deren Dicke zwischen 2/10 und 10/10 Millimeter liegt.

4. Verschmutzungsanzeiger nach irgendeinem der obigen Ansprüche, dadurch gekennzeichnet, daß der untere Teil (7) der unteren Aufnahme (2) durch eine Scheibe (25) verschlossen ist, deren Rand der Mittenöffnung als Bund (26) hochgezogen ist, der als Führung für die Rückholfeder (27) des Kolbens (28) dient.

5. Verschmutzungsanzeiger nach irgendeinem der obigen Ansprüche, dadurch gekennzeichnet, daß der Kolben (28) außen zwei Hauptpartien (29 und 30) aufweist, die zwischen sich eine Schulter (31) bilden, auf der die Feder aufliegt, wobei die Partie (30) mit einem Dicht-O-Ring (32) versehen ist, und wo der Kolben (28) außerdem von seinem Boden aus axial dergestalt aufgebohrt ist, daß eine Aufnahme (33) gebildet wird, die in der Nähe ihrer Öffnung eine kreisförmige Nut (34) aufweist.

6. Verschmutzungsanzeiger nach sämtlichen vorstehenden Ansprüchen, dadurch gekennzeichnet, daß der Magnetträger (36) einerseits durch eine axiale Stange (37) gebildet wird, die in der Nähe ihres freien unteren Endes eine kreisförmige Rippe (38) aufweist, und andrerseits durch eine Kapsel (50) an ihrem oberen Teil, die den Magneten (36) enthält.

7. Verschmutzungsanzeiger nach Anspruch 5 und 6, dadurch gekennzeichnet, daß die Feder (35) aus einer Legierung mit Formgedächtnis (LFG) die Stange (37) des Magnetträgers (36) umgibt und sich zwischen der kreisförmigen Rippe (38) dieser Stange (37) und einem in der Nut (34) des Kolbens (28) angeordneten Anschlagring oder -wulst (52) befindet.

8. Verschmutzungsanzeiger nach irgendeinem der vorstehenden Ansprüche, dadurch gekennzeichnet, daß die Feder aus LFG aus einer Nickel-Titan-Legierung ist.

9. Verschmutzungsanzeiger nach irgendeinem der Ansprüche 1 bis 6, dadurch gekennzeichnet, daß die Feder aus LFG aus einer Kupfer-Zink-Aluminium-Legierung ist.

10. Verschmutzungsanzeiger nach Anspruch 2, dadurch gekennzeichnet, daß die obere Aufnahme (3) aus zwei Partien (9 und 10) besteht, wobei eine erste Partie (9) der Kammer (5) auf der anderen Seite der Membran (4) ausgesetzt ist, während eine obere Partie (10) größeren Durchmessers sich weit nach außen öffnet.

11. Verschmutzungsanzeiger nach einem der Ansprüche 1, 2 und 9, dadurch gekennzeichnet, daß der Körper (1) außen mit einem Teil (16) versehen ist, der eine den Körper (1) überdeckende Partie aufweist, die einen Deckel (23) für die obere Aufnahme (3) bildet, der in seiner Mitte durchbohrt ist, um einen Ring (43) des Melders (40) durchzulassen.

12. Verschmutzungsanzeiger nach einem der Ansprüche 1, 2, 9 und 10, dadurch gekennzeichnet, daß das Teil (16) sich um die Außenwand der oberen Partie des Körpers (1) drehen kann, und daß zu diesem Zweck eine Nut (14) in diesen Körper oberhalb des Bunds (13) eingestochen wurde, während eine andere Nut (17) an der internen Basis des Deckels (23) eingestochen wurde, und wobei ein in diese beiden Nuten eingelegter Ring (15) für die Verbindung des Teils (16) mit dem Körper (1) sorgt.

13. Verschmutzungsanzeiger nach einem der Ansprüche 1, 2 und 9 bis 11, dadurch gekennzeichnet, daß die überdeckende Partie (23) des Teils (16) vollkommen durchbohrt ist, um so zwei aufeinander folgende Durchlässe (18 und 19) mit gleicher Mittellinie zu bilden, die zwischen sich eine Schulter (20) bilden, welche der oberen Endpartie des Körpers (1) gegenüberliegt und über die Kammer (10) hinausragt.

14. Verschmutzungsanzeiger nach irgendeinem der Ansprüche 1 bis 13, dadurch gekennzeichnet, daß in der oberen Aufnahme (3) eine Gruppe von Elementen (40) angeordnet ist, die den Verschmutzungsmelder befestigen, und die eine Stange (42), die an ihrer Basis mit einem Magneten (41) versehen ist, der an die Membran (4) angelegt werden kann, einen sich durch eine lebhafte Farbe von den anderen Teilen unterscheidenden Ring (43) mit einem Außenbund (44), der sich gegen die Schulter (20) des Deckels (23) anlegen kann, eine äußere kreisförmige Aushöhlung (48), eine innere kreisförmige Rippe (45) (die in der oberen Partie eine Schulter bildet) und eine Rückholfeder (46) umfaßt, welche die Stange (42) zwischen der Membran (4) und der Rippe (45) umgibt.

15. Verschmutzungsanzeiger nach einem der Ansprüche 1 und 2, dadurch gekennzeichnet, daß das Teil (16) einen Ansatz (24) mit einer Kammer (21) zur Aufnahme eines Schalters (49) umfaßt, wobei der Boden der Kammer (21) von einem Kanal (22) durchzogen wird, in dem ein als Stößel fungierendes Distanzstück (53) gleiten kann, das normalerweise durch den Drucktaster des Schalters gegen die Wandung des Rings (43) bzw. in die Aushöhlung (48) gedrückt wird, je nach Stellung des genannten Rings.

16. Verschmutzungsanzeiger nach Anspruch 1, dadurch gekennzeichnet, daß der Magnet (91), der durch einen Magnetträger (88) getragen wird, welcher mit dem Boden (82) des Kolbens (80) kooperiert, sich gegenüber dem Kolben verschieben kann, und zwar entsprechend der gegensätzlichen Kräfte zweier Federn, von denen die eine (87) aus Legierung mit Formgedächtnis (LFG) oberhalb einer bestimmten Temperatur hart und unterhalb weich ist, die andere (82) aus konventioneller Legierung mit einer geringeren Kraft als die der warmen Feder (87), jedoch größeren Kraft als die der gleichen Feder (87) in kaltem Zustand, sowie entsprechend der Mittel zur Auslegung der Federn, dergestalt, daß die Feder (87) aus LFG in warmem Zustand Formschluß zwischen dem Magnetträger (88) und dem Kolben (80) herstellt, während in kaltem Zustand der Feder (87) der Magnetträger (88) durch die konventionelle Feder (92) zurückgeschoben wird.

17. Verschmutzungsanzeiger nach Anspruch 16, dadurch gekennzeichnet, daß die Aufnahme (58-59) nach unten hin offen ist, wobei der Magnet (91) zum Boden dieser Aufnahme (58-59) hin ausgerichtet ist, welche durch ein Mittel (75) in zwei Kammern (73-74) unterteilt wird, von denen die als untere Kammer (73) bezeichnete mit der Auslaufseite des Filters kommuniziert, während die als obere Kammer (74) bezeichnete mit der Einlaufseite dieses Filters kommuniziert, so daß, wenn der Druck in der oberen Kammer (74) höher ist als der Druck in der unteren Kammer (73), ein Druckunterschied entsteht, der einen gewissen Wert übersteigen kann, wodurch dann die Verschiebung des Kolbens (80) bewirkt wird, und ein Mittel, um außerhalb der Aufnahme (5) die Stellung des Magneten (91) zu erkennen, wobei dieses Erkennungsmittel aus mindestens einem Schutzrohrkontaktschalter (99) mit Kontaktzungen, die auf den Magnetfluß reagieren, besteht und mit einer geeigneten elektrischen Vorrichtung verbunden ist.

18. Verschmutzungsanzeiger nach Anspruch 18, dadurch gekennzeichnet, daß der Magnetträger (88) eine Stange (89) umfaßt, die mit einer kreisförmigen Rippe (90) versehen ist, und daß die Feder aus LFG (87) auf der oberen Seite dieser Rippe (90) anliegt und die konventionelle Feder (92) auf deren unterer Seite.

19. Verschmutzungsanzeiger nach irgendeinem der Ansprüche 16 und 18, dadurch gekennzeichnet, daß der Kolben (80) eine Axialbohrung (85) mit einer kreisförmigen Nut (86) und einer Scheibe (84) sowie eine zwischen der Rippe (90) und der Scheibe (84) befindliche Feder (87) aus Legierung mit Formgedächtnis (LFG) umfaßt, während die kalibrierte Rückholfeder (92) zwischen der Rippe (90) und dem Boden der Aufnahme (58) liegt.

20. Verschmutzungsanzeiger nach irgendeinem der Ansprüche 16 bis 19, dadurch gekennzeichnet, daß der Körper (1) eine aus zwei Partien, der unteren (58) und der oberen (59), bestehende axiale Aufnahme und einen aus zwei Partien, der unteren (81) und der oberen (82), bestehenden Kolben (80) umfaßt, wobei die Aufnahme in zwei als untere (73) und obere (74) bezeichnete Kammern mittels einer dichten und elastischen Wand (75) unterteilt wird, die durch einen Elastomer-Balg gebildet wird, der einerseits an der Basis der oberen Partie (82) des Kolbens (80) und andrerseits an einer Vorrichtung befestigt ist, welche die Basis (60) der Aufnahme (58) verschließt.

21. Verschmutzungsanzeiger nach irgendeinem der Ansprüche 16 bis 20, dadurch gekennzeichnet, daß der Körper (1) durch eine Partie überragt wird, die einen Deckel (16) bildet, welcher mindestens zwei auf Magnetfluß reagierende Schalter (100-101) wie z. B. Schutzrohrkontaktschalter aufweist, die auf verschiedenen Ebenen entlang der Peripherie des Körpers (1) angeordnet sind.

22. Verschmutzungsanzeiger nach Anspruch 21, dadurch gekennzeichnet, daß zwischen dem Körper (1) und den Schutzrohrkontaktschaltern (100-101) ein Metallmantel von geringer Dicke mit einem Fenster je Schalter angebracht ist.
